# FASCICULE DE BREVET EUROPEEN

(11) **EP 1 576 058 B1**
(45) Date de publication et mention de la délivrance du brevet: **20.04.2011**
(21) Numéro de dépôt: 03813934.1
(22) Date de dépôt: 22.12.2003
(51) Int. Cl.: C08L 95/00, C08L 33/06

(54) **PROCEDE DE PREPARATION DE COMPOSITIONS BITUME/POLYMERE EPOXYDE RETICULE, COMPOSITIONS AINSI OBTENUES ET LEUR UTILISATION.**
VERFAHREN ZUR HERSTELLUNG VON BITUMEN/VERNETZEN EPOXYHARZE ZUSAMMENSETZUNGEN, DARAUS ERHALTENDE MASSEN UND VERWENDUNGEN
METHOD OF PREPARING CROSS-LINKED EPOXIDISED BITUMEN/POLYMER COMPOSITIONS, COMPOSITIONS THUS OBTAINED AND USE THEREOF

(30) Priorité: 23.12.2002 FR 0216515
(43) Date de publication de la demande: 21.09.2005
(73) Titulaire: TOTAL RAFFINAGE MARKETING, 92800 Puteaux (FR)
(72) Inventeur: PLANCHE, Jean-Pascal, F-38540 St-Just-Chaleyssin (FR); TURELLO, Patrick, F-69290 Craponne (FR); SENNINGER, Thierry, F-57700 Hayange (FR); RODRIGUES, Catherine, F-27700 Hennezis (FR)
(74) Mandataire: Pöpping, Barbara
(86) Numéro de dépôt international: PCT/FR2003/003864
(87) Numéro de publication internationale: WO 2004/058897

(56) Documents cités:
- WO-A-96/34058
- WO-A1-96/28513
- FR-A- 2 748 487
- US-A- 4 301 051
- US-A- 5 306 750
- US-A- 5 698 631

## Description

La présente invention concerne un procédé de préparation de nouvelles compositions bitume/polymère époxydé réticulé. L'invention concerne également les compositions ainsi obtenues et leur utilisation comme liants bitumineux, notamment pour la réalisation de revêtements, en particulier de revêtements superficiels routiers et de revêtements d'étanchéité, et pour la réalisation d'enrobés bitumineux.

Il est bien connu d'utiliser des compositions bitumineuses comme revêtements de surfaces diverses et, en particulier, comme enduits superficiels routiers, à condition que ces compositions présentent en combinaison un certain nombre de caractéristiques mécaniques, exposées en détail, par exemple, dans WO 96/15193 A.

Les bitumes usuels ne présentent cependant pas l'ensemble des qualités requises et il a donc été proposé depuis longtemps d'y incorporer des polymères, notamment des élastomères, en vue de modifier leurs propriétés mécaniques et de former ainsi des compositions bitume/polymère présentant les caractéristiques mécaniques souhaitées pour l'application à laquelle elles sont destinées.

C'est ainsi que WO 96/15193 A décrit de très nombreuses compositions bitume/polymère présentant une stabilité et des propriétés mécaniques améliorées, ainsi que des procédés de préparation de ces compositions.

WO 96/15193 indique notamment que le polymère utilisé peut être un élastomère réticulable au soufre et l'on incorpore alors dans le mélange réactionnel un agent de couplage donneur de soufre, apte à provoquer la réticulation in situ de l'élastomère.

La présente invention vise elle aussi à proposer des compositions bitume/polymère réticulé, mais préparées à l'aide d'un agent de réticulation non soufré, c'est-à-dire autre que le soufre ou un composé donneur de soufre.

Plus précisément, l'invention a pour but de proposer de telles compositions bitume/polymère réticulé aptes à être utilisées comme liants bitumineux, dont les propriétés mécaniques et élastomériques, pour cette application, sont comparables à celles des compositions Le document FR 2 748 487 décrit une composition de bitume / polymère époxydé contenant (a) un bitume, (b) un élastomère non époxyde, appelé polymère primaire, et (c) un polymère oléfinique époxydé.

Le document WO 96/34058 décrit une composition comprenant de l'asphalte, un polymère époxydé et une polyamine. analogues dans lesquelles le polymère a été réticulé à l'aide de soufre ou d'un agent donneur de soufre, mais qui présentent une stabilité améliorée à de fortes concentrations en polymère.

A cet effet, l'invention a pour premier objet un procédé de préparation d'une composition bitume/polymère époxydé réticulé, selon la revendication 1.

Le bitume B, de préférence, a un indice de pénétrabilité Pfeiffer compris entre 10 et 900 dixièmes de mm. Ce bitume peut être un bitume de distillation directe, un bitume soufflé, un résidu de désasphaltage ou un résidu de viscoréduction. De tels bitumes peuvent être utilisés seuls ou mélangés entre eux.

Le polymère époxydé utilisé est préparé préalablement au mélange avec le ou les bitumes B et avec l'agent de réticulation Ag. Ce polymère époxydé P peut être de diverses natures.

Selon un premier mode de réalisation de l'invention, le polymère époxydé P est à base d'au moins un des élastomères époxydés Ee1 préparés à partir de composés comportant des doubles liaisons et pour lesquelles l'époxydation est réalisée ex situ par des moyens usuels et connus de l'homme du métier. Ces composés sont les copolymères diène-styrène (butadiène-styrène, chloroprènes-styrène, isoprène-styrène), les terpolymères éthyléne/propylène/diène (EPDM), les polybutadiènes, les polychloroprènes, les polynorbornène et/ou des mélanges de ces composés.

Dans ce cas, la masse moléculaire moyenne en poids de l'élastomère époxydé est comprise entre 10000 et 600000 et sa teneur en époxy est de 0,01 à 30% en poids par rapport au polymère, de préférence entre 0,1 et 15% en poids.

Selon un deuxième mode de réalisation de l'invention, le polymère époxydé P peut être choisi parmi au moins un des polymères époxydés Ee2 suivants :
- polyéthylènes et polypropylènes, époxydé(s) notamment par greffage de composés comprenant des groupes époxy;
- copolymères de l'éthylène et/ou de propylène, copolymères de l'éthylène et d'acétate de vinyle, copolymères d'éthylène et de (méth)acrylate d'alkyle en C₁-C₁₂, époxydé(s) notamment par greffage de composés comprenant des groupes époxy;
- copolymères d'éthylène ou de propylène et d'un monomère époxyfonctionnalisé tel que le (méth)acrylate de glycidyle ou le vinyléther de glycidyle;
- et terpolymères de l'éthylène ou de propylène, d'un acétate de vinyle ou d'un (meth)acrylate d'alkyle en C₁-C₁₂, et d'un monomère époxyfonctionnalisé tel que le (méth)acrylate de glycidyle ou le vinyléther de glycidyle.

La teneur en époxy du polymère Ee2 est du même ordre que celle de l'élastomère Ee1.

Selon un troisième mode de réalisation de l'invention, le polymère époxydé P est à base d'élastomère(s) d'espèce Ee1 et du polymère d'espèce Ee2.

Dans le mélange réactionnel du procédé de l'invention, le polymère époxydé P représente entre 0,1 et 30% du poids total bitume + polymère époxydé et, de préférence, de 1 à 20% de ce poids, quelles que soient les espèces de polymère époxydé.

L'agent de réticulation Ag du polymère époxydé P, lui, est présent dans le mélange réactionnel en une quantité représentant entre 0,01 et 30% en poids du polymère époxydé P.

Cet agent de réticulation Ag peut être, par exemple :
- un acide carboxylique tel que l'acide 4, 4'-dicarboxydiphényléther, l'acide sébacique ou autre ;
- un anhydride tel que l'anhydride phtalique, l'anhydride oxydiphtalique, l'anhydride triméllitique, l'anhydride téréphtalique ou l'anhydride pyrroméllitique ;
- un ester butylique-acide des anhydrides phtalique ou oxydiphtalique ;
- un acide sulfonique tel que les acides para-toluènesulfonique, naphtalènesulfonique ou naphtalènedisulfonique, méthanesulfonique, éthanesulfonique ou 1-hexanesulfonique ;
- un acide phosphonique tel que l'acide benzènephosphonique ou tertio-butylphosphonique ;
- un acide phosphorique tel que les acides phosphorique, polyphosphorique et alkylphosphoriques, par exemple, l'acide dodécylphosphorique, l'acide diéthylphosphorique ou l'acide glycérophosphorique, ou les acides arylphosphoriques, par exemple, l'acide phénylphosphorique ;
- et leurs mélanges.

Suivant les caractéristiques désirées pour la composition bitume/polymère époxydé réticulé, un accélérateur de réticulation ou un inhibiteur de réticulation peut être présent dans le milieu réactionnel.

Comme accélérateur de réticulation susceptible d'être utilisé, on mentionnera, par exemple, les alcoolates, les acétates et les carboxylates.

Un inhibiteur de réticulation peut être utilisé dans le cas où une stabilité à très long terme, pouvant atteindre, voire dépasser, plusieurs semaines, est désirée pour la composition bitume/polymère époxydé réticulé.

Des bases fortes peuvent être mentionnées comme exemples d'un tel inhibiteur de réticulation, notamment des amines primaires aliphatiques et aromatiques. Parmi ces amines, on citera notamment l'octadécylamine et la 4-hexadécylaniline.

Comme indiqué ci-dessus, le procédé de préparation conforme à l'invention est mis en oeuvre à une température de 100 à 150°C, de préférence de 120 à 150°C.

L'agitation du mélange réactionnel peut être à fort ou faible cisaillement.

La durée de mise en contact des réactifs présents dépend de leur nature et peut aller de quelques minutes à quelques heures.

De préférence, l'agent de réticulation Ag du polymère époxydé P est ajouté au bitume après le polymère époxydé.

L'accélérateur de réticulation, si l'on en utilise un, peut être incorporé avant ou après l'agent de réticulation Ag du polymère époxydé P.

Dans le cas où l'on utilise un inhibiteur de réticulation, celui-ci doit être incorporé dans le mélange réactionnel avant l'agent de réticulation du polymère époxydé.

Le procédé conforme à l'invention permet de contrôler le degré de réticulation du polymère époxydé P. Cette réticulation est majoritairement celle du polymère époxydé P lui-même mais n'exclut pas une co-réaction avec certaines molécules polaires du bitume parmi les résines et les asphaltènes.

Les compositions bitume/polymère époxydé réticulé susceptibles d'être obtenues par le procédé conforme à l'invention constituent un autre objet de l'invention.

Ces compositions sont utilisables directement, ou après dilution par un bitume ou un mélange de bitumes, comme liants bitumineux, notamment pour la réalisation de revêtements superficiels routiers, de revêtements d'étanchéité ou d'enrobés bitumineux.

Ces utilisations constituent un autre objet de l'invention.

Des exemples de mise en oeuvre de l'invention vont être décrits ci-après. Ils n'ont aucun caractère limitatif.

### Exemples.

### Préparation du polymère époxydé P1.

Le polymère époxydé P1 est préparé à partir d'un copolymère séquencé styrène-butadiène.

On utilise un réacteur en acier inoxydable d'un litre, équipé d'un agitateur à ruban et d'un système de régulation de la température.

Dans ce réacteur, maintenu sous atmosphère d'azote, on introduit 200 g d'un copolymère styrène-butadiène diséquencé, à 25% en poids de styrène et à 75% en poids de butadiène. Ce copolymère a une masse moléculaire moyenne en poids, M_{w}, de 140 000 Dalton, et un indice de polymolécularité M_{w}/Mₙ de 1,3.

On introduit dans le réacteur 1 800 g d'éthylbenzène et le mélange est chauffé sous agitation progressivement à environ 50°C.

Après dissolution du copolymère, on ajoute une solution comprenant 29,4 g d'acide formique et 70,6 g d'eau oxygénée à 30%.

Après 60 minutes, la solution de polymère époxydé P1 est récupérée par soutirage en fond de réacteur.

Environ 2000 g d'éthylbenzène sont ajoutés pour diluer le polymère P1, puis le polymère P1 est précipité dans environ 10000 g d'acétone et ensuite récupéré par filtration.

Le polymère P1 imprégné d'acétone est laissé sous un courant d'air pendant environ 30 minutes puis est remis en solution dans 1200 g d'un mélange à 20% d'éthylbenzène et 80% d'hexane comprenant 7 g d'Irgafos^{®} 168 et 6 g d'Irganox 1520D^{®}.

Le polymère P1 est placé dans une étuve sous vide, et le solvant est éliminé sous vide à environ 25°C, puis pendant environ 120 minutes sous vide à 60°C.

La teneur en époxyde du polymère P1 obtenu est de 5,5% en poids (méthode potentiométrique, ASTM 1652-73).

Le polymère est aussi analysé par une technique de chromatographie d'exclusion stérique, afin de connaître l'évolution de ses caractéristiques : M_{w} = 120 000 Dalton et M_{w}/Mₙ = 1,1. Le polymère n'est donc pas dégradé par le traitement avec l'acide performique.

### Bitume.

Le bitume utilisé est un bitume de grade 160/220 issu de la distillation directe sous vide d'un pétrole brut du Moyen orient.

Les résultats des essais effectués sont rassemblés dans le Tableau qui suit ces exemples.

### Exemple 1 (exemple comparatif)

On introduit dans un réacteur maintenu à 180°C et équipé d'un système d'agitation mécanique 920 g du bitume ci-dessus et 80 g du copolymère styrène-butadiène époxydé obtenu ci-dessus.

Le mélange s'effectue pendant une durée de trois heures sous agitation.

### Exemple 2 (exemple comparatif)

On répète l'essai de l'Exemple 1 en introduisant dans le mélange réactionnel 20 g de trioctyl amine (TOA) et on laisse à nouveau le mélange se poursuivre pendant 3 heures.

### Exemple 3

On reprend dans les mêmes conditions l'essai de Exemple 1 et, après avoir laissé le mélange s'effectuer pendant 3 heures, on introduit alors dans le réacteur, maintenu à 180°C, en % en poids du mélange réactionnel total, 1% d'acide p-toluène sulfonique (APTS), comme agent de réticulation.

On continue à agiter le mélange à 180°C pendant 4 heures, après quoi on dilue une fraction de la composition bitume/polymère époxydé réticulé obtenu avec un bitume 35/50, jusqu'à une teneur finale en polymère de 3,5 % en poids.

On laisse le mélange pendant 1 heure sous agitation.

### Exemple 4

On répète l'essai de l'Exemple 3, mais en remplaçant l'addition de 1% en poids d'APTS par 0,5% en poids d'acide naphtalène disulfonique (ANDS).

### Exemple 5

On répète à nouveau l'essai de l'Exemple 3, mais en remplaçant l'addition de 1% en poids de APTS par 0,3% en poids d'anhydride phtalique (AP).

### Exemple 6

On répète l'essai de l'Exemple 5, mais en ajoutant 0,5% en poids d'acétate de tétrabutylammonium (ATBA), servant d'accélérateur de réticulation, avant l'ajout de l'anhydride phtalique.

On laisse alors la réaction se poursuivre pendant 1 heure à 180°C après l'addition de l'anhydride phtalique, au lieu de 4 heures, puis on dilue avec un bitume 35/50, comme dans l'Exemple 3.

Le Tableau ci-après présente les caractéristiques physiques des mélanges obtenus dans les exemples ci-dessus.

**Tableau**

| Exemple | Bitume de base | 1 | 2 | 3 | 4 | 5 | 6 |
|---|---|---|---|---|---|---|---|
| Teneur en polymère de la composition obtenue (%) | 0 | 8 | 8 | 8 | 8 | 8 | 8 |
| Teneur en polymère de la composition diluée (%) | 0 | - | - | 3,5 | 3,5 | 3,5 | 3,5 |
| Nature de l'additif | - | - | TOA | APTS | ANDS | AP | AP |
| Teneur en additif (% en poids) | 0 | 0 | 2 | 1 | 0,5 | 0,3 | 0,3 |
| Nature de l'accélérateur de réticulation | - | - | - | - | - | - | ATBA |
| Teneur en accélérateur (% en poids) | 0 | 0 | 0 | 0 | 0 | 0 | 0,5 |

| Propriétés des compositions non diluées | | | | | | | |
|---|---|---|---|---|---|---|---|
| Différence de pénétrabilité (0,1 mm) (1) | - | 20 | 20 | 4 | 2 | 6 | 3 |
| Différence de TBA (°C) (2) | - | 7 | 8 | 1 | 0.5 | 1 | 0 |

| Propriétés des compositions après dilution | | | | | | | |
|---|---|---|---|---|---|---|---|
| Pénétration à 25°C (1/10 mm) | 202 | 72 | 74 | 58 | 57 | 65 | 61 |
| Température de Bille et Anneau (°C) (2) | 40 | 50 | 49 | 59 | 62 | 56 | 58 |
| Indice de pénétrabilité Pfeiffer | 0,02 | -0,4 | -0,5 | 1,5 | 1,8 | 0,9 | 1,1 |
| Elongation max. à 5°C (%) (3) | - | 200 | 250 | >700 | >700 | >700 | >700 |
| Contrainte (daN/cm2)(3) | - | 0,1 | 0,1 | 0,7 | 0,8 | 0,6 | 0,7 |

| | | | | | | | |
|---|---|---|---|---|---|---|---|
| (1) Selon norme EN 1426 (2) Température Bille et Anneau, selon la norme EN 1427 (3) Test de traction directe à 5°C, avec une vitesse d'étirement de 500 mm/mn. | | | | | | | |

Ce Tableau montre que, dans l'Exemple 1, l'ajout de polymère époxydé dans le bitume modifie plutôt faiblement ses propriétés mécaniques, représentées par sa pénétrabilité et sa température de bille et anneau, et qu'il dégrade sa susceptibilité thermique, comme le montre une légère diminution de l'indice de pénétrabilité.

La stabilité au stockage de la composition bitume/polymère époxydé de l'Exemple 1, testée par ailleurs, se révèle médiocre, puisqu'au bout de 7 jours de séjour d'un échantillon logé dans un tube vertical à 180°C, on relève une forte différence de propriétés entre la phase supérieure et la phase inférieure de l'échantillon.

L'Exemple 2 montre que l'ajout d'une amine tertiaire à la composition bitume/polymère époxydé de l'Exemple 1 ne modifie pratiquement pas les propriétés mécaniques du mélange, si ce n'est un léger ramollissement.

En revanche, les Exemples 3, 4 et 5 de mise en oeuvre du procédé de l'invention montrent que l'ajout dans le mélange réactionnel d'un agent de réticulation du polymère époxydé se traduit par une amélioration considérable des propriétés mécaniques et élastomériques (plus grande élongation en traction et élongation maximale supérieure dans un test de traction directe) de la composition bitume/polymère époxydé réticulé obtenue.

L'Exemple 6 montre que l'incorporation dans le mélange réactionnel d'un accélérateur de réticulation (acétate de tétrabutyl ammonium) renforce l'effet de l'anhydride phtalique utilisé seul dans l'Exemple 5 comme agent de réticulation et le rend aussi efficace que les autres additifs testés de réticulation.

On notera qu'après dilution avec un bitume 35/50 jusqu'à une teneur finale en polymère de la composition résultante égale à 3,5% en poids, les propriétés physiques de la composition diluée ainsi obtenue restent parfaitement satisfaisantes, comme le montrent la consistance (température bille et anneau), la susceptibilité thermique (indice de pénétrabilité) et les propriétés élastomères.

Les propriétés mécaniques et élastomériques des compositions conformes à l'invention les rendent donc aptes à une utilisation comme liant bitumineux soit seules, soit en association avec une composition différente conforme à l'invention et/ou après dilution avec au moins un bitume, suivant les propriétés recherchées pour ce liant bitumineux:

## Revendications

1. Procédé de préparation d'une composition bitume/polymère époxydé réticulé, **caractérisé en ce que** l'on met en contact, à une température comprise entre 100 et 250°C et sous agitation, au moins un bitume B, au moins un polymère préalablement époxydé P qui est un élastomère époxydé Ee1 choisi parmi les copolymères diène-styrène, les EPDM, un polybutadiène, un polychloroprène, un polynorbornène et/ou un mélange de ces composés, présentant, une masse moléculaire moyenne en poids entre 10000 et 600 000 et sa teneur en époxy est de 0.01 à 30% en poids par rapport au polymère, et au moins un agent de réticulation Ag non soufré du polymère époxydé.

2. Procédé selon la revendication 1, **caractérisé en ce que** le bitume B a un indice de pénétrabilité Pfeiffer compris entre 10 et 900 dixièmes de millimètre.

3. Procédé selon l'une des revendications 1 et 2, **caractérisé en ce que** le bitume B est choisi parmi les bitumes de distillation directe, les bitumes soufflés, les résidus de désasphaltage et les résidus de viscoréduction.

4. Procédé selon l'une quelconque des revendications 1 à 3, **caractérisé en ce que** la composition comprend en outre un polymère époxydé choisi parmi au moins un des polymères époxydés Ee2 suivants:
- polyéthylènes et polypropylènes, époxydé(s) notamment par greffage de composés comprenant des groupes époxy :
- copolymères de l'éthylène et/ou de propylène, copolymères de l'éthylène et d'acétate de vinyle, copolymères d'éthyléne et de (meth)acrylate d'alkyle en C₁-C₁₂, époxydé(s) notamment par greffage de composés comprenant des groupes époxy :
- copolymères d'éthylène ou de propylène et d'un monomère époxyfonctionnalisé;
- terpolymères de l'éthylène ou de propylène, d'un acétate de vinyle ou d'un (meth)acrylate d'alkyle en C₁-C₁₂, et d'un monomère époxyfonctionnalisé.

5. Procédé selon l'une quelconque des revendications précédentes, **caractérisé en ce que**, dans le mélange réactionnel, le polymère époxydé P représente entre 0.1 et 30 % du poids total bitume + polymère époxydé et, de préférence, de 1 à 20 % de ce poids.

6. Procédé selon l'une quelconque des revendications précédentes, **caractérisé en ce que** l'agent de réticulation Ag du polymère époxydé P est choisi dans le groupe constitué par :
- un acide carboxylique tel que l'acide 4, 4'-dicarboxydiphényléther, l'acide sébacique ou autre ;
- un anhydride tel que l'anhydride phtalique, l'anhydride oxydiphtalique, l'anhydride triméllitique ou l'anhydride téréphtalique ou l'anhydride pyrroméllitique ;
- un ester butylique-acide des anhydrides phtalique ou oxydiphtalique ;
- un acide sulfonique tel que les acides para-toluènesulfonique, naphtalènesulfonique ou naphtalènedisulfonique, méthanesulfonique, éthanesulfonique ou 1-hexanesulfonique ;
- un acide phosphonique tel que l'acide benzènephosphonique ou tertio-butylphosphonique ;
- un acide phosphorique tel que les acides phosphorique, polyphosphorique et alkylphosphoriques, par exemple, l'acide dodécylphosphorique, l'acide diéthylphosphorique ou l'acide glycérophosphorique, ou les acides arylphosphoriques, par exemple, l'acide phénylphosphorique ;
- et leurs mélanges.

7. Procédé selon l'une des revendications précédentes, **caractérisé en ce que** l'agent de réticulation Ag du polymère époxydé P est présent dans le mélange réactionnel en une quantité représentant, entre 0.01 et 30% en poids du polymère époxydé P.

8. Procédé selon l'une quelconque des revendications précédentes, **caractérisé en ce que** l'agent de réticulation Ag est incorporé dans le milieu réactionnel après le polymère époxydé P.

9. Procédé selon l'une des revendications précédentes, **caractérisé en ce qu'**un accélérateur de réticulation Ag est incorporé dans le milieu réactionnel.

10. Composition bitume/polymère époxydé réticulé susceptible d'être obtenue par le procédé selon l'une des revendications précédentes.

11. Utilisation comme liant bitumineux d'une composition selon la revendication précédente, soit seule, soit en mélange avec une autre composition selon la revendication précédente et/ou après dilution par au moins un bitume.

12. Utilisation selon la revendication précédente pour la réalisation d'un revêtement, notamment d'un revêtement superficiel routier ou d'un revêtement d'étanchéité, ou encore d'enrobés bitumineux.

## Claims

1. Method of preparing a bitumen/crosslinked epoxidized polymer composition, **characterized in that**, at a temperature between 100 and 250°C and with stirring, at least one bitumen B is brought into contact with at least one previously epoxidized polymer P which is an epoxidized elastomer Ee1 chosen from diene/styrene copolymers, EPDMs, a polybutadiene, a polychloroprene, a polynorbornene and/or a mixture of these compounds, having a weight-average molecular weight between 10 000 and 600 000 and its epoxy content is from 0.01 to 30% by weight relative to the polymer, and at least one non-sulphur-containing crosslinking agent Ag for the epoxidized polymer.

2. Method according to Claim 1, **characterized in that** the bitumen B has a Pfeiffer penetration index between 10 and 900 tenths of a millimetre.

3. Method according to either of Claims 1 and 2, **characterized in that** the bitumen B is chosen from straight-run distillation bitumens, blown bitumens, deasphalting residues and visbreaking residues.

4. Method according to any one of Claims 1 to 3, **characterized in that** the composition also comprises an epoxidized polymer chosen from at least one of the epoxidized polymers Ee2 below:
- polyethylenes and polypropylenes, which are epoxidized in particular by grafting compounds comprising epoxy groups;
- copolymers of ethylene and/or of propylene, copolymers of ethylene and of vinyl acetate, copolymers of ethylene and of C₁-C₁₂ alkyl (meth)acrylate, which are epoxidized in particular by grafting compounds comprising epoxy groups;
- copolymers of ethylene or of propylene and of an epoxy-functionalized monomer; and
- terpolymers of ethylene or of propylene, of a vinyl acetate or of a C₁-C₁₂ alkyl (meth)acrylate and of an epoxy-functionalized monomer.

5. Method according to any one of the preceding claims, **characterized in that**, in the reaction mixture, the epoxidized polymer P represents between 0.1 and 30% of the total bitumen + epoxidized polymer weight and, preferably, from 1 to 20% of this weight.

6. Method according to any one of the preceding claims, **characterized in that** the crosslinking agent Ag of the epoxidized polymer P is chosen from the group constituted by:
- a carboxylic acid such as diphenyl ether 4,4'-dicarboxylic acid, sebacic acid or another;
- an anhydride such as phthalic anhydride, oxydiphthalic anhydride, trimellitic anhydride or terephthalic anhydride or pyromellitic anhydride;
- a butyric acid ester of phthalic or oxydiphthalic anhydride;
- a sulphonic acid such as para-toluenesulphonic, naphthalenesulphonic or naphthalenedisulphonic, methanesulphonic, ethanesulphonic or 1-hexanesulphonic acid;
- a phosphonic acid such as benzenephosphonic or *tert-*butylphosphonic acid;
- a phosphoric acid such as phosphoric, polyphosphoric and alkylphosphoric acids, for example dodecylphosphoric acid, diethylphosphoric acid or glycerophosphoric acid, or arylphosphoric acids, for example phenylphosphoric acid;
- and mixtures thereof.

7. Method according to one of the preceding claims, **characterized in that** the crosslinking agent Ag of the epoxidized polymer P is present in the reaction mixture in an amount representing between 0.01 and 30% by weight of the epoxidized polymer P.

8. Method according to any one of the preceding claims, **characterized in that** the crosslinking agent Ag is incorporated into the reaction medium after the epoxidized polymer P.

9. Method according to one of the preceding claims, **characterized in that** a crosslinking accelerator Ag is incorporated into the reaction medium.

10. Bitumen/crosslinked epoxidized polymer composition capable of being obtained by the method according to one of the preceding claims.

11. Use, as a bituminous binder, of a composition according to the preceding claim, either alone, or as a mixture with another composition according to the preceding claim and/or after dilution by at least one bitumen.

12. Use according to the preceding claim for producing a surfacing, in particular a road surfacing or a waterproof coating, or else bituminous mixes.

## Patentansprüche

1. Verfahren zur Herstellung einer Zusammensetzung von Bitumen/vernetztem Epoxidpolymer, **dadurch gekennzeichnet, dass** mindestens ein Bitumen B, mindestens ein vorab epoxidiertes Polymer P, welches ein epoxidiertes Elastomer Ee1 ist, das aus Dien-Styrol-Copolymeren, EPDMs, einem Polybutadien, einem Polychloropren, einem Polynorbornen und/oder einer Mischung dieser Verbindungen ausgewählt ist und das eine gewichtsgemittelte Molmasse zwischen 10.000 und 600.000 aufweist und dessen Epoxidgehalt 0,01 bis 30 Gew.-% bezogen auf das Polymer ist, und mindestens ein nicht-schwefelhaltiges Vernetzungsmittel Ag des epoxidierten Polymers bei einer Temperatur zwischen 100 und 250°C und unter Rühren in Kontakt gebracht werden.

2. Verfahren gemäß Anspruch 1, **dadurch gekennzeichnet, dass** das Bitumen B eine Eindringtiefe nach Pfeiffer-Index zwischen 10 und 900 Zehntelmillimeter aufweist.

3. Verfahren gemäß einem der Ansprüche 1 und 2, **dadurch gekennzeichnet, dass** das Bitumen B aus Bitumen der Direktdestillation, Blasbitumen, Deasphaltierungsresten und Visbreakingresten ausgewählt ist.

4. Verfahren gemäß irgendeinem der Ansprüche 1 bis 3, **dadurch gekennzeichnet, dass** die Zusammensetzung zusätzlich ein Epoxidpolymer umfasst, das aus mindestens einem der folgenden epoxidierten Polymere Ee2 ausgewählt ist:
- Polyethylene und Polypropylene, insbesondere epoxidiert durch Aufpfropfen von Epoxidgruppen enthaltenden Verbindungen;
- Copolymere aus Ethylen und/oder Propylen, Copolymere aus Ethylen und Vinylacetat, Copolymere aus Ethylen und C₁-C₁₂ Alkyl(Meth)acrylat, insbesondere epoxidiert durch Aufpfropfen von Epoxidgruppen umfassenden Verbindungen;
- Copolymere aus Ethylen oder Propylen und einem epoxidfunktionalisierten Monomer;
- Terpolymere aus Ethylen oder Propylen, einem Vinylacetat oder einem C₁-C₁₂ Alkyl(Meth)acrylat und einem epoxidfunktionalisierten Monomer.

5. Verfahren gemäß irgendeinem der vorangehenden Ansprüche, **dadurch gekennzeichnet, dass** das epoxidierte Polymer P in der Reaktionsmischung zwischen 0,1 und 30 Gew.-% des Gesamtgewichts von Bitumen + epoxidiertem Polymer ausmachen, bevorzugt 1 bis 20 Gew.-%.

6. Verfahren gemäß irgendeinem der vorangehenden Ansprüche, **dadurch gekennzeichnet, dass** das Vernetzungsmittel Ag des epoxidierten Polymers P aus der aus:
- einer Carbonsäure wie 4,4'-Dicarboxydiphenylether, Sebacinsäure oder anderen;
- einem Anhydrid wie Phthalanhydrid, Oxydiphthalanhydrid, Trimellitanhydrid oder Terephthalanhydrid oder Pyromellitanhydrid;
- einem Butylsäureester von Phthalanhydriden oder Oxydiphthalanhydriden;
- einer Sulfonsäure wie para-Toluolsulfon-, Naphthalinsulfon- oder Naphthalindisulfon-, Methansulfon-, Ethansulfon- oder 1-Hexansulfon-Säuren;
- einer Phosphonsäure wie Benzolphosphon- oder *tert-*Butylphosphon-Säure;
- einer Phosphorsäure wie Phosphor-, Polyphosphor- und Alkylphosphor-Säuren, z.B. Dodecylphosphorsäure, Diethylphosphorsäure oder Glycerinphosphorsäure, oder den Arylphosphorsäuren, z.B. Phenylphosphorsäure;
- und deren Mischungen,
bestehenden Gruppe ausgewählt ist.

7. Verfahren gemäß einem der vorangehenden Ansprüche, **dadurch gekennzeichnet, dass** das Vernetzungsmittel Ag des epoxidierten Polymers P in der Reaktionsmischung in einer zwischen 0,01 und 30 Gew.-% des epoxidierten Polymers P entsprechenden Menge vorliegt.

8. Verfahren gemäß irgendeinem der vorangehenden Ansprüche, **dadurch gekennzeichnet, dass** das Vernetzungsmittel Ag nach dem epoxidierten Polymer P in das Reaktionsmedium eingearbeitet wird.

9. Verfahren gemäß einem der vorangehenden Ansprüche, **dadurch gekennzeichnet, dass** ein Vernetzungsbeschleuniger Ag in das Reaktionsmedium eingearbeitet wird.

10. Zusammensetzung von Bitumen/vernetztem Epoxidpolymer, erhältlich durch das Verfahren gemäß einem der vorangehenden Ansprüche.

11. Verwendung einer Zusammensetzung gemäß dem vorangehenden Anspruch, entweder einzeln oder in Mischung mit einer anderen Zusammensetzung gemäß dem vorangehenden Anspruch und/oder nach Verdünnung mit mindestens einem Bitumen, als bituminöses Bindemittel.

12. Verwendung gemäß dem vorangehenden Anspruch für die Herstellung einer Beschichtung, insbesondere einer Straßenoberflächenbeschichtung oder einer Abdichtbeschichtung, oder für bituminöse Mischgüter.
